# EUROPÄISCHE PATENTSCHRIFT

(11) **EP 1 825 783 B1**
(45) Veröffentlichungstag und Bekanntmachung des Hinweises auf die Patenterteilung: **02.05.2012**
(21) Anmeldenummer: 07001254.7
(22) Anmeldetag: 20.01.2007
(51) Int. Cl.: A47C 7/32, A47C 23/14, B60N 2/70, A47C 7/22, A47C 7/46

(54) **Feder für Stützmatten und Stützmatte in Sitzkonstruktionen**
Spring for supporting mats and supporting mat in a seat construction
Ressort pour nappe de support et nappe de support dans des constructions de siège

(30) Priorität: 24.01.2006 DE 102006003343
(43) Veröffentlichungstag der Anmeldung: 29.08.2007
(73) Patentinhaber: Federnwerke Marienberg GmbH, 09496 Marienberg (DE)
(72) Erfinder: Pahner, Klaus, 09435 Scharfenstein (DE); Pöge, Heinz, 09128 Chemnitz (DE); Seitenglanz, Jan, 09496 Marienberg (DE); Kafka, Robert, 85716 Unterschleissheim (DE)
(74) Vertreter: Findeisen Hübner Neumann

(56) Entgegenhaltungen:
- WO-A-99/29536
- DE-A1- 4 320 382
- DE-A1- 19 714 235
- FR-A1- 2 759 649
- GB-A- 467 104
- GB-A- 1 495 585
- US-A- 3 428 975

## Beschreibung

Die Erfindung betrifft eine Stützmatte mit einer Federung für Stützmatten in Sitzkonstruktionen für Kraftfahrzeuge und Sitzmöbel.

Zur Gewährleistung der notwendigen Abstützung und für die Schaffung einer federnd nachgiebigen Sitz- und Lehnenfläche mit ausreichendem Sitzkomfort sind bereits verschiedenartige Konstruktionen für eine Anwendung in Kraftfahrzeugen und/oder für Möbel vorgeschlagen worden.

Eine diesbezügliche Konstruktion gemäß DE 29 26 571 A1 besteht aus zwei dickeren sich längs erstreckenden Drähten, die in bestimmten Abständen durch dünnere Drähte verbunden sind. Die dickeren längs erstreckenden Drähte sind mit einer nachgiebigen Ummantelung aus beispielsweise Papier oder Kunststoff versehen, um die dünneren Verbindungsdrähte verrutschsicher zu befestigen und um die radiale Bewegung der Windungen der umschlungenen Enden zu behindern, jedoch nicht zu verhindern. Das an sich ungenügende Federungsverhalten derartiger Matten, unterstützt durch zusätzliche Längsdrähte aus Kunststoff oder Papier in gleichmäßigen Abständen zueinander, wird kompensiert durch die Aufhängung dieser Sitzmatten mittels Zugfedern am jeweiligen Sitzrahmen. Diese Zugfedern verbinden in gleichmäßigen Abständen mit ihren Ösen den jeweiligen Sitzrahmen mit den längs erstreckenden Drähten der Stützmatte. Eine ähnliche technische Lösung ist aus DE 28 06 754 C2 bekannt, die lediglich Unterschiede bezüglich der Befestigung der dünnen Querdrähte an den sich längs erstreckenden Drähte aufweist.

Ein wesentlicher Nachteil derartiger Stützmatten ist die komplizierte und aufwendige Verbindung der Querdrähte mit den Längsdrähten. Weiterhin erfordert die Herstellung und Verarbeitung der Ummantelung der Längsdrähte mit Papier und Kunststoff erhebliche Kosten und selbst die Einarbeitung von Papier- oder Kunststoffsträngen in Längsrichtung erheblichen Aufwand. Ferner ist nachteilig, dass zahlreiche Einzelteile zusammengefügt werden müssen, um eine solche Matte entstehen zu lassen. Bezüglich der Abfederung ist außerdem festzustellen, dass die Zugfedern bei höheren und vor allem schlagartigen Belastungen, wie sie beispielsweise in Kraftfahrzeugsitzen auftreten, häufig ihre elastischen Eigenschaften verlieren, so dass die Aufhängung unzulänglich wird.

EP 0 128 407 B1 beschreibt eine Stützmatte, die aus mehreren in gleichmäßigen Abständen angeordneten Drähten gebildet wird. Diese Drähte weisen eine Verformung auf, die im Belastungsfall federnde Eigenschaften bewirkt. Dadurch kann auf Zugfedern verzichtet und die Matte starr am Sitzrahmen befestigt werden. Allerdings erfordert auch diese technische Lösung eine komplizierte und störanfällige Befestigung der dünnen Einzeldrähte an den Längsdrähten. Mit aufwändigen Umschlingungen für die Befestigung an den mit Papier oder Kunststoff umhüllten Längsdrähten soll eine weitgehende Verrutschfestigkeit erzielt werden. Weiterhin müssen beispielsweise aus Polypropylen bestehende Abstandshalterelemente angeordnet werden. Folglich weist auch eine derart ausgestaltete Matte die Nachteile einer aufwändigen und komplizierten Montage auf. Außerdem sind solche Matten nicht oder nur bedingt für eine Abstützung zusätzlicher Lordosestützen oder anderer Zusatzeinrichtungen mit den entsprechenden Funktions- und Festigungsanforderungen geeignet.

Aufgabe der Erfindung ist es, die benannten Nachteile zu beseitigen und eine Stützmatte mit einer Federung für Stützmatten sowie eine Stützmatte in Sitzkonstruktionen zu schaffen, die aus wenigen Einzelteilen besteht, in wenigen Arbeitsoperationen herstellbar ist, höheren Qualitätsanforderungen genügt und einen modularen Aufbau zum Tragen von Zusatzeinrichtungen aufweist.

Diese Aufgabe wird erfindungsgemäß gelöst, indem eine erforderliche Anzahl einstückig hergestellter Doppelzugfedern, die an ihren äußeren Enden eine Einhängeöse zur Befestigung an einem Sitzrahmen und an ihren inneren Enden ein verbindendes gerades Drahtstück in der Länge der Stützmattenbreite aufweisen und indem mehrere derartige Doppelzugfedern mit ihren verbindenden Drahtstück zwischen zwei Pressvliesmatten, die alternativ faserverstärkt oder nichtfaserverstärkt ausgestaltet sein können, unverschieblich zu einer Stützmatte verbunden sind.

Die Pressvliesmatten können zusätzlich mit Verstärkungsdrähten versehen werden, die beispielsweise beidseitig auslaufende Enden besitzen oder einseitig innerhalb der Pressvliesmatte U-förmig verbunden sind. Die freien Enden der Verstärkungsdrähte sind länger als die Kante der Pressvliesmatte ausgebildet und dienen der zusätzlichen Abstützung der Stützmatte am Sitzrahmen. Das U-förmige Verbindungsteil kann aus den Verstärkungsdrähten gebogen oder auch als Zusatzteil ausgebildet werden und wird in die untere und/oder obere Randzone der Vliesmatte eingepresst.

In weiterer Ausgestaltung wird vorgeschlagen, dass die Zugfedern geteilt ausgeführt sind, wobei sie an den inneren Enden mit kürzeren Hakenösen versehen sind und mittels eines geraden Drahtes, der an den Enden beidseitig angeformte Haken besitzt, so verbunden sind, dass die Verbindungsstellen durch Pressvlies überdeckt sind.

Eine weitere Ausgestaltung sieht vor, die Zugfedern geteilt mit einem verkürzten geraden Ende auszubilden, an derem Ende ein Haken angeformt ist. Die Länge der geraden Enden ist so bemessen, dass sie sich in der Mitte der Stützmatte überschneiden und über die verpressten Vliesmatten eine Einheit bilden.

In einer weiteren Ausgestaltung wird eine Mehrzahl von Form-Wire-Federn zur Mattengestaltung eingesetzt. Die jeweils erforderliche Anzahl von in bestimmten Abständen angeordneten Form-Wire-Federn wird mit je zwei faserverstärkten oder nichtfaserverstärkten Pressvliesstreifen an den Seiten und mittig verbunden, so dass eine Stützmatte gebildet wird. Hierbei können die federnden Verformungen der Form-Wire-Federn trapez-, rechteck-, halbrund- oder quadratförmig ausgebildet sein. Die Verformungen innerhalb einer Stützmatte sind dabei gleichmäßig ausgerichtet. An einer geeigneten bzw. notwendigen Anzahl von Form-Wire-Federn sind in Verlängerung derselben Einhängehaken bzw. Einhängeösen vorgesehen, um mit diesen die Matte am Sitzrahmen zu fixieren. Alle weiteren Form-Wire-Federn sind seitlich an einem geraden Ende mit einem Haken versehen, so dass er in den äußeren Pressvliesstreifen mit verpressbar ist. Im Kreuzungsbereich der Form-Wire-Federn mit den Längsdrähten weisen die Form-Wire-Federn Vertiefungen auf und bewirken somit eine Verrutschsicherheit. Bei dieser Ausführung können ebenfalls sich längs erstreckende Verstärkungsdrähte mit beidseitig freien Enden zur Abstützung am Sitzrahmen sowie Querdrähte eingepresst werden.

In weiterer Ausgestaltung wird vorgeschlagen, dass zusätzliche Verstärkungselemente, wie ein oder mehrere verstärkende Längsdrähte und/oder verstärkende Vlieselemente zur Abstützung sowie zur Befestigung weiterer Sitz- und Lehnenkomforthilfsmittel, wie beispielsweise Lordoseeinrichtungen, Sitzbelegungserkennungssensoren, Elemente von crashaktiven Kopfstützen (AKS) und dgl. einbringbar sind. Die Vliesmatten können dabei im Bereich der Lehnenkomforthilfsmittel unterbrochen sein. Zweckmäßigerweise kann das Vlies auch mit anderen geometrischen Formen ausgebildet sein

Ein Ausführungsbeispiel der Erfindung ist in der Zeichnung dargestellt und wird nachfolgend beschrieben. Es zeigen:
- Fig. 1: eine Stützmatte mit einstückigen Doppelzugfedern
- Fig. 2: eine Stützmatte mit einstückigen Doppelzugfedern und U-förmigen Verstärkungsdrähten
- Fig. 3: eine Stützmatte mit einstückigen Doppelzugfedern und beidseitig verlängerten Verstärkungsdrähten
- Fig. 4: eine Stützmatte mit einstückigen Doppelzugfedern, beidseitig verlängerten Verstärkungsdrähten und Querdrähten
- Fig. 5: eine Darstellung einer Doppelzugfeder
- Fig. 6: eine Darstellung von Zugfedern mit kürzeren Hakenösen und Verbindungsdraht
- Fig. 7: eine Darstellung von geteilten Doppelzugfedern mit überdeckten Mittelhaken
- Fig. 8: eine Stützmatte mit Form-Wire-Federn und Pressvliesstreifen
- Fig. 9: eine Stützmatte nach Fig. 8 mit beidseitig verlängerten Verstärkungsdrähten
- Fig. 10: eine Darstellung einer Form-Wire-Feder für die Einhängung der Stützmatte
- Fig. 11: eine Darstellung einer Form-Wire-Feder ohne Rahmenbefestigungsfunktion
- Fig. 12: eine Darstellung einer Stützmatte mit einem zusätzlichen mittig angeordneten Verstärkungsdraht und zusätzlicher Lordosestütze
- Fig. 13: eine Darstellung einer Stützmatte mit mehreren zusätzlichen Verstärkungsdrähten mit unterbrochener Vliesmatte und Lordosestütze
- Fig. 14: eine Darstellung einer streifenförmigen Stützmatte mit zusätzlichen Vliesverstärkungselementen und Lordosestütze
- Fig. 15: eine Darstellung einer streifenförmigen Stützmatte, bei der das Vlies im Lordosebereich einstückig ausgeführt ist

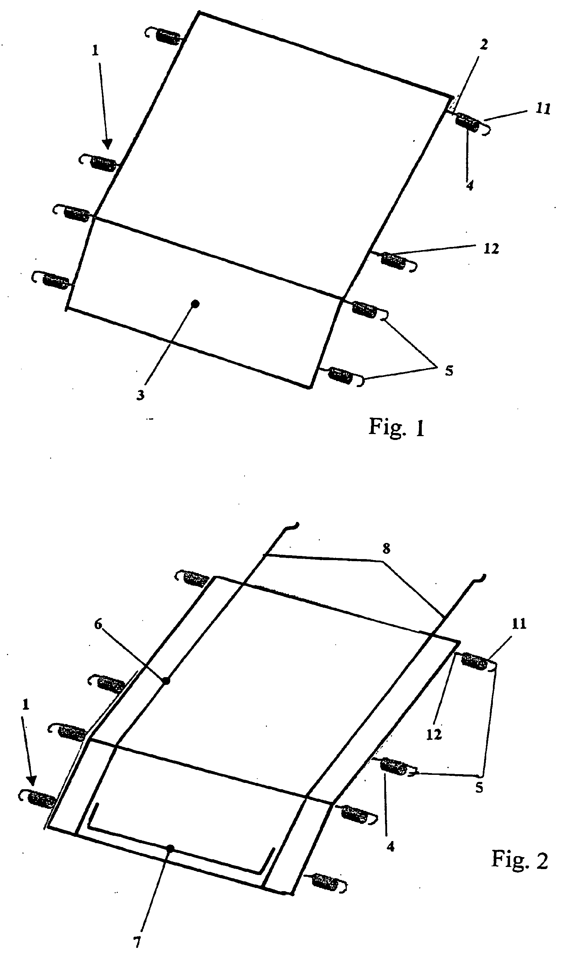

Die in Fig.1 dargestellte Stützmatte besteht aus einer Vielzahl von Doppelzugfedern 1, die mit ihrem verbindenden geraden Drahtstück 2 zwischen zwei Pressvliesmatten 3 jeweils unverschieblich verbunden sind. Die Anordnung der Doppelzugfedem 1 ist dabei so gestaltet, dass sie die übliche Form, beispielsweise einer Rückenmatte, unterstützen. Die Doppelzugfedern 1 weisen beidseitig einen für eine optimale Federung gestalteten Windungskörper 4 auf, an dessen äußerem Ende 11 jeweils eine Einhängeöse 5 zur Einhängung in den nicht näher dargestellten Sitzrahmen angebracht ist. Eine derart ausgeführte Stützmatte kann in Abhängigkeit der jeweils konkreten Belastungsverhältnisse problemlos modifiziert werden.

Gemäß Fig. 2 wird der Stützmatte ein Verstärkungsdraht 6 zugeordnet, der im unteren Teil ein U-förmiges Verbindungsstück 7 und oberhalb auslaufende Enden 8 aufweist, die zur Stabilisierung am nicht dargestellten Sitzrahmen aufliegen oder mit diesem verbunden sind.

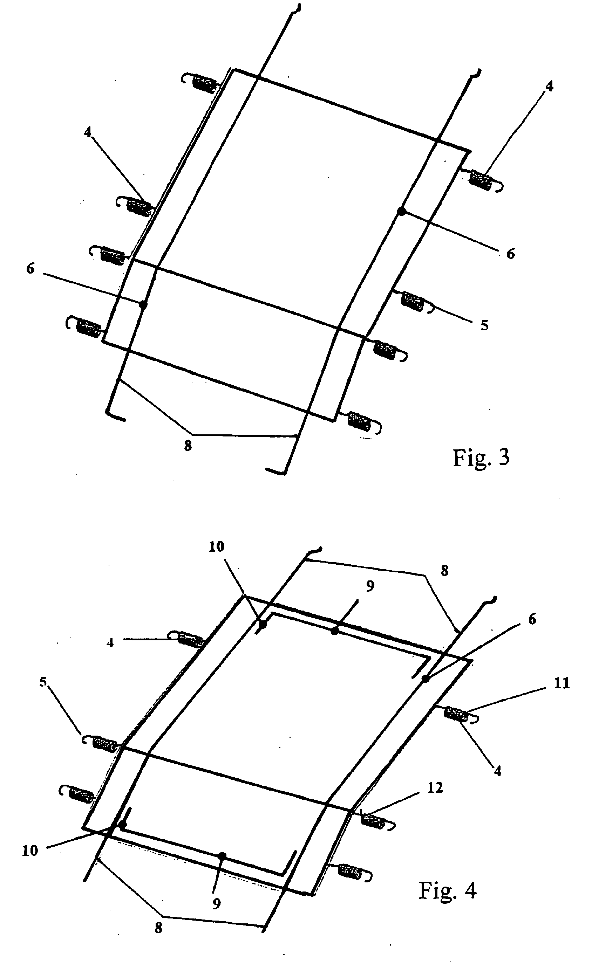

Fig. 3 und Fig. 4 zeigen weitere Ausführungen einer Stützmatte. Hierbei weisen die Verstärkungsdrähte 6, die in üblicher Weise seitlich, d.h. in den Randzonen der Pressvliesmatten eingebracht sind, nach oben und nach unten auslaufende Enden 8 auf. Diese Enden 8 können am oberen und am unteren Sitzrahmen aufgelegt werden. Weiterhin sind in den oberen und/oder unteren Randzonen Querdrähte 9 angeordnet, die mit den Verstärkungsdrähten 6 verbunden sein können oder auch durch beidseitige Abbiegungen 10 im Pressvlies 3 stabilisiert sein können. Diese Art der Verstärkung durch Querdrähte 9 kann auch an weiteren Stellen der Stützmatte zur Erfüllung unterstützender Aufgaben angebracht werden.

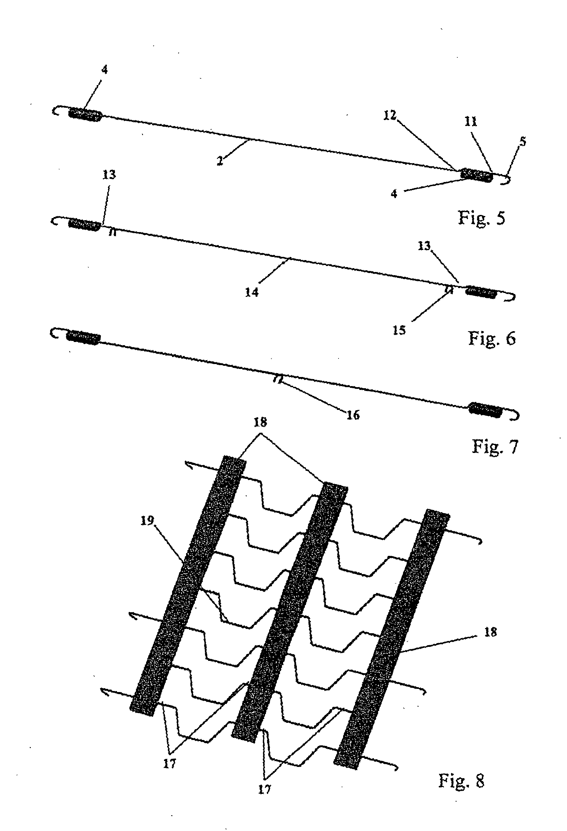

In Fig. 5 bis Fig. 7 sind beispielhafte Ausführungen von Doppelzugfedem 1 dargestellt. Bei einer ersten Variante gemäß Fig. 5 ist diese Doppelzugfeder 1 einstückig hergestellt, d.h. ein verbindendes Drahtstück 2 ist mit den inneren Enden 12 der Windungskörper 4 verbunden und die äußeren Enden 11 sind zu je einer Einhängeöse 5 ausgestaltet. Infolge der Kompliziertheit der Herstellung einer solchen Doppelzugfeder 1, die auch vom Vorhandensein eines jeweiligen Maschinenparks abhängig ist, können weitere Gestaltungsvarianten gleichwertige Ergebnisse erzielen. Durch die hervorragende Umschlingung durch die Pressvliesmatten 3 ist es beispielsweise auch möglich, die inneren Enden 12 an den Windungskörpern 4 mit Hakenösen 13 zu versehen und mittels eines geraden Drahtes 14, der an den Enden angeformte Haken 15 besitzt, zu verbinden. Bei der Variante gemäß Fig. 7 weisen die Drahtstücke 2 jeweils nur die etwas mehr als halbe Länge sowie am Ende einen Haken 16 auf, so dass sie zwischen den Pressvliesmatten 3 einstückig verbunden werden können.

In Fig. 8 ist die Ausführung einer erfindungsgemäßen Stützmatte dargestellt, bei der anstelle von Doppelzugfedern Form-Wire-Federn 17 verwendet werden. Eine erforderliche Anzahl solcher Form-Wire-Fedem 17 ist hierbei im wesentlichen gleichgerichtet zueinander angeordnet und mit je zwei faserverstärkten oder nichtfaserverstärkten Pressvliesstreifen 18 an den Seiten und mittig verbunden. Die Verformungen 19 der Form-Wire-Federn 17 können trapez-, rechteck-, halbrund- oder quadratförmig sein, wobei die konkreten Formen und Abmessungen zweckmäßigerweise dem jeweiligen Belastungsfall angepasst werden.

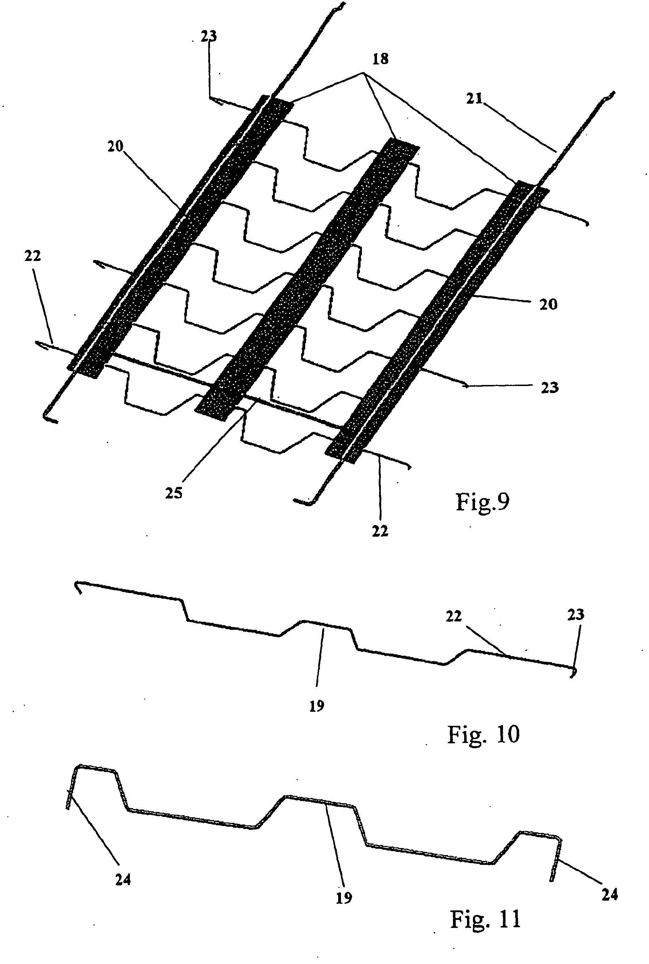

Gemäß Fig. 9 kann eine derartige Stützmatte weiter ausgestaltet werden, indem zumindest in die äußeren Pressvliesstreifen 18 Verstärkungsdrähte 20 eingebracht werden. Diese Verstärkungsdrähte 20 können mit oder ohne auslaufende Enden 21 ausgestaltet werden. Aus dieser Darstellung ist weiterhin ersichtlich, dass die zum Einhängen in den Sitzrahmen vorgesehenen Form-Wire-Federn 17 jeweils verlängerte Enden 22 mit daran angeformten Einhängehaken bzw. Einhängeösen 23 aufweisen, siehe auch Fig. 10. Die übrigen Form-Wire-Federn 17 sind mit einer rechtwinkligen Abbiegung 24 versehen, die etwa mittig zwischen den Pressvliesstreifen 18 anordenbar ist, siehe Fig. 11. Im Kreuzungsbereich der verbindenden Drahtstücke 2 der Doppelzugfedern 1 bzw. der Form-Wire-Fedem 17 mit den Verstärkungsdrähten 6 und den zusätzlichen Längsdrähten 26 sind in die Federelemente Vertiefungen eingebracht um ein Verrutschen vor dem Verpressen zu vermeiden.

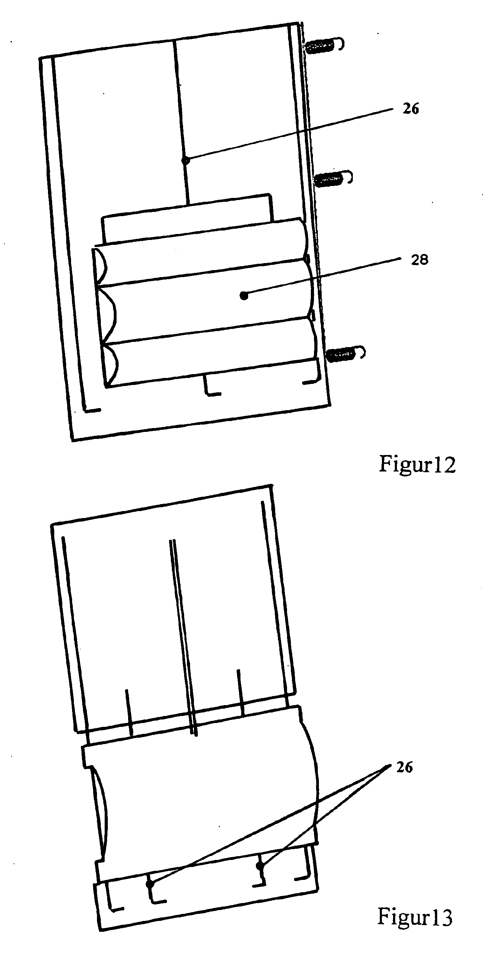

Fig.12 zeigt eine Stützmatte, die zusätzlich mit einem mittig angeordneten Verstärkungsdraht 26 sowie einer schematisch dargestellten Lordosestütze 28 bestückt ist.

Gemäß Fig. 13 weist die Stützmatte mehrere zusätzliche, hier lediglich kurze Längsdrähte 26 auf. Gleichzeitig ist bei dieser Ausführung das Vlies 3 der Stützmatte geteilt ausgeführt.

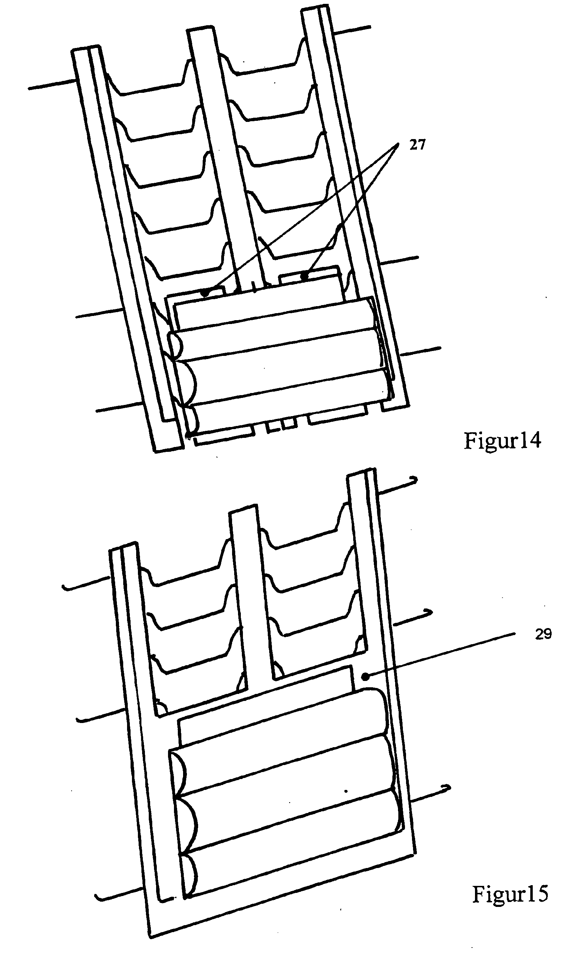

Fig. 14 zeigt eine Ausführung der Stützmatte, bei der zur Stabilisierung und Befestigung einer Lordoseeinrichtung 28 an den Form-Wire-Fedem 17 zusätzliche Vlieselemente 27 angebracht sind.

Fig.15 zeigt schließlich eine weitere Ausführung der Stützmatte, bei der die Vliesstreifen im Bereich der Lordoseeinrichtung 28 mit einem zusätzlichen Vliesformelement 29 vereint worden sind, so dass hier eine großflächige Vliesabdeckung zwischen Form-Wire-Federn 17 und Lordoseeinrichtung 28 vorliegt.

Die beschriebenen Ausführungen lassen erkennen, dass mit der erfindungsgemäßen technischen Lösung unter Beachtung von jeweils konkreten Erfordernissen die vielfältigsten Formen und Konstruktionen von Stützmatten gestaltet werden können.

### Bezugszeichenliste

- 1 =: Doppelzugfeder
- 2 =: verbindendes Drahtstück
- 3 =: Pressvliesmatte
- 4 =: Windungskörper
- 5 =: Einhängeöse
- 6 =: Verstärkungsdraht
- 7 =: U-förmiges Verbindungsstück
- 8 =: auslaufende Enden
- 9 =: Querdrähte
- 10 =: beidseitige Abbiegungen
- 11 =: äußere Enden
- 12 =: innere Enden
- 13 =: Hakenösen
- 14 =: gerader Draht
- 15 =: angeformte Haken
- 16 =: Haken
- 17 =: Form-Wire-Federn
- 18 =: Pressvliesstreifen
- 19 =: Verformungen der Form-Wire-Federn
- 20 =: Verstärkungsdrähte
- 21 =: auslaufende Enden
- 22 =: verlängerte Enden
- 23 =: Einhängehaken
- 24 =: rechtwinklige Abbiegung
- 25 =: Querdrähte
- 26 =: zusätzliche Längsdrähte
- 27 =: zusätzliche Vlieselemente
- 28 =: Lordoseeinrichtung
- 29 =: Vliesformelement

## Patentansprüche

1. Stützmatte mit einer Federung für Stützmatten in Sitzkonstruktionen für Kraftfahrzeuge und Sitzmöbel, **dadurch gekennzeichnet,**
**dass** eine erforderliche Anzahl von einstückig hergestellten Doppelzugfedern (1) an ihren äußeren Enden (11) eine Einhängeöse (5) zur Befestigung an einem Sitzrahmen und an ihren inneren Enden (12) ein verbindendes Drahtstück (2) in der Länge der Stützmattenbreite aufweisen, wobei mehrere derartige Doppelzugfedem (1) mit ihrem verbindenden Drahtstück (2) zwischen zwei faserverstärkten oder nichtfaserverstärkten Pressvliesmatten (3) unverschieblich zu einer Stützmatte verbunden sind.

2. Stützmatte nach Anspruch 1, **dadurch gekennzeichnet,**
**dass** die Pressvliesmatten (3) zusätzlich mit Verstärkungsdrähten (6) versehen sind, die beidseitig auslaufende Enden (8) aufweisen oder einseitig innerhalb der Pressvliesmatte (3) U-förmig verbunden sind.

3. Stützmatte nach Anspruch 1 und 2, **dadurch gekennzeichnet, dass** die freien Enden (8) der Verstärkungsdrähte (6) länger als die Kante der Pressvliesmatte (3) ausgebildet sind und zur oberen Abstützung der Stützmatte am Sitzrahmen dienen

4. Stützmatte nach Anspruch 1 bis 3, **dadurch gekennzeichnet,**
**dass** die sich längs erstreckenden Verstärkungsdrähte (6) durch Querdrähte (9) ergänzt werden.

5. Stützmatte nach Anspruch 1 bis 4, **dadurch gekennzeichnet,**
**dass** die Zugfedern (1) geteilt ausgestaltet und mit kürzeren Hakenösen (13) versehen sind und mittels eines geraden Drahtes (14), der an den Enden angeformte Haken (15) aufweist, so verbunden sind, dass die Verbindungsstellen durch Pressvlies überdeckbar sind.

6. Stützmatte nach Anspruch 1 bis 5, **dadurch gekennzeichnet,**
**dass** die Zugfedern (1) so geteilt ausgeführt sind, dass das der gegenüberliegenden Feder zugewandte gerade und innere Ende (12) mit einem Haken (13) versehen ist und die Länge des geraden und inneren Endes (12) so bemessen ist, dass sich die Haken (13) in der Mitte der Stützmatte überschneiden.

7. Stützmatte mit einer Federung für Stützmatten in Sitzkonstruktionen für Kraftfahrzeuge und Sitzmöbel, **dadurch gekennzeichnet,**
**dass** eine erforderliche Anzahl von Form-Wire-Federn (17) derart zueinander angeordnet ist, dass die Form-Wire-Federn (17) mit je zwei faserverstärkten oder nichtfaserverstärkten Pressvliesstreifen (18) an den Seiten und mittig, eine Stützmatte bildend, verbunden sind.

8. Stützmatte nach Anspruch 7, **dadurch gekennzeichnet,**
**dass** die Verformungen (19) der Form-Wire-Federn (17) trapez-, rechteck-, halbrund- oder quadratförmig ausgebildet sind.

9. Stützmatte nach Anspruch 7 und 8, **dadurch gekennzeichnet,**
**dass** die Verformungen (19) sämtlicher Form-Wire-Federn (17) einer Stützmatte gleichgerichtet sind.

10. Stützmatte nach Anspruch 7, **dadurch gekennzeichnet,**
**dass** die zur Befestigung der Stützmatte am Sitzrahmen ausgestalteten Form-Wire-Federn (17) beidseitig verlängerte Enden (22) aufweisen, die mit jeweils einem Einhängehaken oder einer Einhängeöse (23) und mit einer Vertiefung im Kreuzungsbereich mit den Längsdrähten versehen sind.

11. Stützmatte nach Anspruch 7, **dadurch gekennzeichnet,**
**dass** die nicht zur Befestigung der Stützmatte am Sitzrahmen ausgestalteten Form-Wire-Federn (17) beidseitig mit einer rechtwinkligen Abbiegung (24) versehen sind, die jeweils etwa mittig in den äußeren Pressvliesstreifen (18) verpressbar ist.

12. Stützmatte nach Anspruch 7, **dadurch gekennzeichnet,**
**dass** in den äußeren und/oder inneren Pressvliesstreifen (18) zusätzlich sich längs erstreckende Verstärkungsdrähte (20) sowie Querdrähte (25) eingepresst sind.

13. Stützmatte nach mindesten einem der vorhergehenden Ansprüche, **dadurch gekennzeichnet,**
**dass** zusätzliche Verstärkungselemente, ausgestaltet als Längsdrähte (26) und/oder verstärkende Vlieselemente (27), zur Abstützung und/oder Befestigung von weiteren Sitz-und Lehnenkomforthilfsmitteln, wie Lordoseeinrichtungen (28), Sitzbelegungserkennungssensoren, Elementen von crashaktiven Kopfstützen (AKS) und dergleichen vorgesehen sind.

14. Stützmatte nach mindesten einem der vorhergehenden Ansprüche, **dadurch gekennzeichnet,**
**dass** die Vliesmatten (3) im Bereich der Lehnenkomforthilfsmittel (28) unterbrochen ausgestaltet sind.

15. Stützmatte nach mindesten einem der vorhergehenden Ansprüche, **dadurch gekennzeichnet,**
**dass** die Pressvliesstreifen (18) im Bereich der Lehnenkomforthilfsmittel (28) mit einem zusätzlichen Vliesformelement (29) baueinheitlich ausgestaltet sind.

## Claims

1. A supporting mat with a spring suspension array for supporting mats in seat constructions for motor vehicles and chairs, **characterized in that**
a required number of dual tension springs (1) manufactured in one piece comprise a safety eye (5) for attaching a seat frame at their outer ends (11) and a connecting wire piece (2) the length of which equals the width of the supporting mat at their inner ends (12), several of said dual tension springs (1) being immovably interlinked by their connecting wire pieces (2) with pressed felt mats (3) to form a supporting mat.

2. The supporting mat according to claim 1, **characterized in that**
said pressed felt mats (3) are also equipped with reinforcing wires (6) that either comprise free ends (8) on both sides or are connected in a U shape at one end within the pressed felt mat (3).

3. The supporting mat according to claims 1 and 2, **characterized in that** the free ends (8) of the reinforcing wires (6) are longer than the edge of the pressed felt mat (3) and are used to support the supporting mat at the top against the seat frame.

4. The supporting mat according to claims 1 to 3, **characterized in that**
the reinforcing wires (6) that run in longitudinal direction are supplemented by transverse wires (9).

5. The supporting mat according to claims 1 to 4, **characterized in that**
the tension springs (1) have a divided design and comprise shorter hook eyes (13) and are connected using a straight wire (14) that has hooks (15) fitted to its ends such that the joints can be covered by the pressed felt.

6. The supporting mat according to claims 1 to 5, **characterized in that**
the tension springs (1) have a divided design such that their straight and inner ends (12) that face the opposite spring are equipped with a hook (13) and that the length of the straight and inner end (12) is dimensioned such that the hooks (13) overlap in the center of the supporting mat.

7. A supporting mat with a spring suspension array for supporting mats in seat constructions for motor vehicles and chairs, **characterized in that**
a required number of wire form springs (17) are arranged relative to one another such that they are connected on their sides and in their centers with two fiber-reinforced or non-fiber reinforced pressed felt strips (18), forming a supporting mat.

8. The supporting mat according to claim 7, **characterized in that**
the formed shapes (19) of the wire form springs (17) can be trapezoid, rectangular, semicircular, or square.

9. The supporting mat according to claims 7 and 8, **characterized in that**
the formed shapes (19) of all wire form springs (17) of a supporting mat are parallel.

10. The supporting mat according to claim 7, **characterized in that**
the wire form springs (17) designed for fastening the supporting mat to the seat frame comprise extended ends (22) on both sides, each fitted with a hook or safety eye (23) and an indentation at the intersection with the longitudinal wires.

11. The supporting mat according to claim 7, **characterized in that**
the wire form springs (17) not designed for fastening the supporting mat to the seat frame comprise a right-angled bend (24) on both sides that can be pressed about axially into the outer pressed felt strips (18).

12. The supporting mat according to claim 7, **characterized in that**,
in addition, longitudinal reinforcing wires (20) and transverse wires (25) are pressed into the outer and/or inner pressed felt strips (18).

13. The supporting mat according to any one of the preceding claims, **characterized in that**
additional reinforcing elements designed as longitudinal wires (26) and/or reinforcing felt elements (27) are provided for supporting and/or fastening other aids for seating and backrest comfort such as lordotic devices (28), seat occupancy sensors, elements of crash-active head rests (AHR) and the like.

14. The supporting mat according to any one of the preceding claims, **characterized in that**
the felt mats (3) comprise recesses in the section of the backrest comfort aids (28).

15. The supporting mat according to any one of the preceding claims, **characterized in that**
the pressed felt strips (18) comprise an integrated felt form element (29) in the section of the backrest comfort aids (28).

## Revendications

1. Nappe de support avec ressort pour nappes de support dans des constructions de siège pour véhicules et meubles d'assise, **caractérisée en ce**
**qu'**un nombre nécessaire de ressorts de double traction (1) fabriqués en monobloc sont munis, au niveau de leurs bouts extérieurs (11), d'un oeillet d'accrochage (5) qui, lui, assure la fixation de ces ressorts au bâti de siège, tandis qu'au niveau de leurs bouts intérieurs (12), les ressorts sont dotés d'un fil métallique de raccord (2) dont la longueur est conforme à la largeur de la nappe de support, et où plusieurs de ces ressorts de double traction (1) situés entre deux nappes en tissu non tissé comprimé (3) qui, renforcés de fibres ou non, forment une nappe de support de par leur raccordement à leur fil métallique de raccord (2), ceci de telle sorte que tout déplacement des ressorts soit exclu.

2. Nappe de support suivant la revendication 1, **caractérisée en ce**
**que** les nappes en tissu non tissé comprimé (3) sont munis en plus de fils métalliques de renfort (6) qui, eux, ont des bouts sortants sur les deux côtés (8) ou qu'ils sont raccordés, sur un seul côté et à l'intérieur de la nappe en tissu non tissé comprimé (3), l'un à l'autre en forme d'U.

3. Nappe de support suivant les revendications 1 et 2, **caractérisée en ce**
**que** les bouts libres (8) des fils métalliques de renfort (6) sont plus longs que le bord de la nappe en tissu non tissé comprimé (3), et que ceux-ci servent à assurer l'appui supérieur de la nappe de support sur le bâti de siège.

4. Nappe de support suivant les revendications 1 à 3, **caractérisée en ce**
**que** les fils métalliques de renfort (6) s'étendant sur l'axe longitudinal sont complétés par des fils métalliques transversaux (9).

5. Nappe de support suivant les revendications 1 à 4, **caractérisée en ce**
**que** les ressorts de traction (1) sont partagés et dotés d'oeillets à crochet (13), et que ces ressorts sont raccordés par un fil métallique droit (14) dont les bouts sont munis de crochets fixes (15), de telle sorte que les endroits de raccord puissent être couverts par le tissu non tissé comprimé.

6. Nappe de support suivant les revendications 1 à 5, **caractérisée en ce que**
les ressorts de traction (1) sont partagés de telle sorte que le bout droit et intérieur (12) montrant vers le ressort opposé est muni d'un crochet (13), et que la longueur du bout droit et intérieur (12) est dimensionnée de telle sorte que les crochets (13) se chevauchent au milieu de la nappe de support.

7. Nappe de support avec ressort pour nappes de support dans des constructions de siège pour véhicules et meubles d'assise, **caractérisée en ce**
**qu'**un nombre nécessaire de ressorts type «form-wire» (17) sont disposés l'un vers l'autre de telle sorte que chacun de ces ressorts «form-wire» (17) soit raccordé, sur leurs côtés et de façon centrée, à deux bandes en tissu non tissé comprimé (18) qui, renforcés de fibres ou non, forment ainsi une nappe de support.

8. Nappe de support suivant la revendication 7, **caractérisée en ce**
**que** les formages (19) des ressorts «form-wïre» (17) peuvent être trapézoïdales, rectangulaires, semi-circulaires ou quadratiques.

9. Nappe de support suivant les revendications 7 et 8, **caractérisée en ce**
**que** les formages (19) de l'ensemble des ressorts «form-wire» (17) adaptés à une nappe de support.

10. Nappe de support suivant la revendication 7, **caractérisée en ce**
**que** les ressorts «form-wire» (17) assurant la fixation de la nappe de support au bâti de siège présentent, sur leurs deux côtés, des bouts prolongés (22) dont chacun est doté d'un crochet ou d'un oeillet d'accrochage (23) ainsi que, au niveau de l'intersection avec les fils métalliques longitudinaux, d'un creux.

11. Nappe de support suivant la revendication 7, **caractérisée en ce**
**que** les ressorts «form-wire» (17) assurant la fixation de la nappe de support au bâti de siège sont dotés, sur leurs deux côtés, d'une pièce de branchement rectangulaire (24) qui, elle, peut être pressée de façon centrée dans chaque bande extérieure en tissu non tissé comprimé (18).

12. Nappe de support suivant la revendication 7, **caractérisée en ce**
**que** tant des fils métalliques de renfort (20) que des fils métalliques transversaux (25) ont été pressés dans les bandes extérieures et/ou intérieures en tissu non tissé comprimé (18).

13. Nappe de support suivant au moins l'une des revendications précédentes, **caractérisée en ce**
**que** des éléments de renfort conçus en forme de fils métalliques longitudinaux (26) et/ou davantage d'éléments de renfort en tissu non tissé (27) y sont disposés afin d'assurer l'appui et/ou la fixation d'autres moyens auxiliaires visant à améliorer le confort d'assise, comme appuis-lordose (28), capteurs qui signalent l'occupation des sièges, éléments pour appuis- têtes actifs (AKS) etc.

14. Nappe de support suivant au moins l'une des revendications précédentes, **caractérisée en ce**
**que** les nappes en tissu non tissé (3) situées au niveau des moyens auxiliaires visant à améliorer le confort d'assise (28) sont disposées de façon non continue.

15. Nappe de support suivant au moins l'une des revendications précédentes, **caractérisée en ce**
**que** les bandes en tissu non tissé comprimé (18) situées au niveau des moyens auxiliaires visant à améliorer le confort d'assise au niveau des dossiers de siège (28) sont principalement complétées par un élément de formage en tissu non tissé (29).
